# EUROPEAN PATENT APPLICATION

(11) **EP 4 371 744 A1**
(43) Date of publication of application: **22.05.2024**
(21) Application number: 21950221.8
(22) Date of filing: 16.07.2021
(51) Int. Cl.: B29C 69/02, B29C 45/17, F16J 15/10

(54) **MOLDING METHOD AND DIE**

(71) Applicant: Kokoku Intech Co., Ltd., Taito-ku Tokyo 110-0015 (JP)
(72) Inventor: NISHIMURO Makiya, Utsunomiya-shi, Tochigi 321-0905 (JP); HIRAYAMA Kouji, Utsunomiya-shi, Tochigi 321-0905 (JP)
(74) Representative: Balder IP Law, S.L.
(86) International application number: PCT/JP2021/026894
(87) International publication number: WO 2023/286285

(57) **Abstract**

There are provided a molding method and a mold capable of further reducing the distance between an inclined portion of a base material and a seal member when the seal member is molded onto the base material including the inclined portion. A molding method includes: a preforming step of injecting a rubber material 150 into a groove 562 at a temperature where the rubber material 150 is not vulcanized, in a cavity plate 510 including the groove 562 into which the rubber material 150 is injected; and a vulcanization molding step of sandwiching a base material 300 between the cavity plate 510 in which the rubber material 150 is injected into the groove 562 and a mold 520, and molding the rubber material 150 onto the base material 300 as a seal member 172 at a temperature where the rubber material 150 is vulcanized. The cavity plate 510 includes a gap forming portion 564 that creates a gap Sp between the gap forming portion 564 and an inclined portion 304 of the base material 300 when a flat surface 302 and a flat surface 306 of the base material 300 are pressed in the vulcanization molding step, and a connecting groove connecting the groove 562 and the gap forming portion 564. The groove 562 of the cavity plate 510 is provided in the vicinity of the gap forming portion 564.

## Description

### TECHNICAL FIELD

The present invention relates to a molding method and a mold for molding a seal member onto a base material.

### BACKGROUND ART

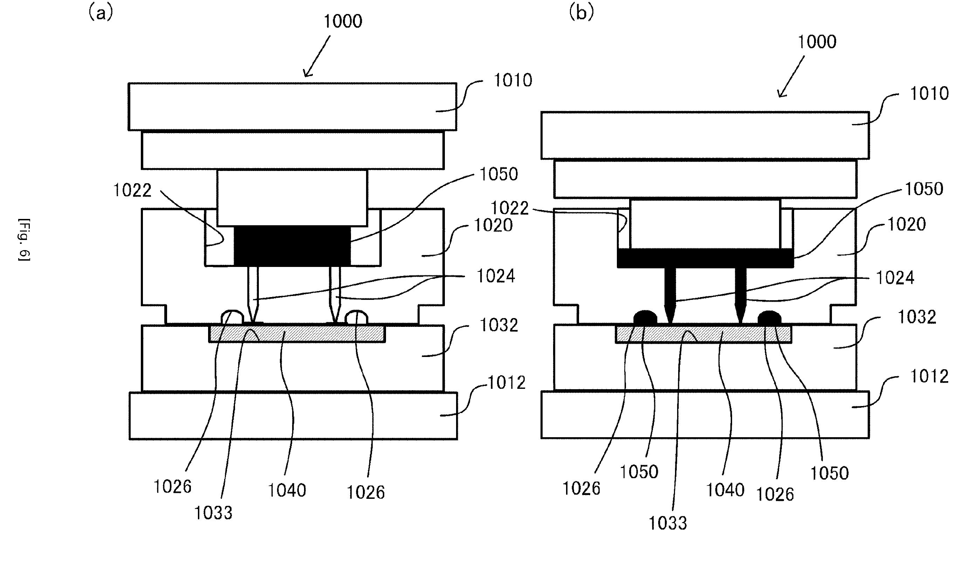

In the related art, a molding method for molding a seal member such as rubber onto a base material such as metal, resin, or paper has been proposed. Fig. 6 is a cross-sectional view of a molding machine 1000 that performs transfer molding of the related art, Fig. 6(a) is a view showing a state where a rubber material 1050 is charged into a pot 1022 of the molding machine 1000, and Fig. 6(b) is a view showing a state where mold clamping and the injection of the rubber material 1050 are performed in the molding machine 1000. The molding machine 1000 includes heating plates 1010 and 1012 and molds 1020 and 1032. The mold 1020 includes the pot 1022 into which the rubber material 1050 is charged; a groove 1026 for molding a seal member onto a base material 1040; and a gate 1024 for injecting the rubber material 1050 into the groove 1026. The mold 1032 includes a recess 1033 in which the base material 1040 is disposed. The molding machine 1000 applies, for example, a pressure (hereinafter, referred to as an injection pressure) of 1 MPa to 200 MPa to the rubber material 1050 by clamping the molds after the rubber material 1050 is charged and the base material 1040 is disposed, and the rubber material 1050 is injected into the groove 1026. The molding machine 1000 molds the seal member onto the base material 1040 such as a separator by crosslinking the rubber material 1050 using, for example, heat at 80°C to 220°C generated by the heating plate 1010.

In addition, for example, Patent Document 1 discloses a method for manufacturing a gasket-integrated plate used for a separator for a fuel cell, a top cover of a hard disk drive, and the like. Incidentally, there is a base material including not only a flat plate but also an inclined portion (hereinafter, also referred to as a flange shape) at an end portion, and a seal member may be molded in the vicinity of the flange shape of the base material.

### CITATION LIST

### PATENT DOCUMENT

Patent Document 1: JP 2004-225721 A

### SUMMARY OF THE INVENTION

### PROBLEM TO BE SOLVED BY THE INVENTION

However, in the molding method of the related art, when the seal member is formed in the vicinity of the flange shape of the base material having a flange shape at the end portion, a certain distance is required between the flange shape and the seal member. For this reason, in order to increase the area of a region inside the seal member on the base material, the area of the entirety of the base material has to be increased. Increasing the area of the entirety of the base material causes an increase in the size of a product using the base material as a component, which is a risk. For this reason, it is required to mold the seal member to increase the area of the region inside the seal member without increasing the area of the entirety of the base material including a flange shape at the end portion. Namely, it is required to mold the seal member as close to the vicinity of the flange shape as possible.

The present invention has been made in view of the above-described circumstances, and an exemplary object of the present invention is to provide a molding method and a mold capable of further reducing the distance between an inclined portion of a base material and a seal member when the seal member is molded onto the base material including the inclined portion.

### MEANS FOR SOLVING THE PROBLEM

In order to solve the above-described problems, the present invention has the following configurations. (1) A molding method for molding a seal member onto a first flat surface of a base material having the first flat surface, an inclined portion continuous with the first flat surface, and a second flat surface continuous with the inclined portion and higher than the first flat surface, includes: a first step of injecting a raw material for the seal member into a groove at a temperature where the raw material is not vulcanized (crosslinked), in a first mold including the groove into which the raw material is injected; and a second step of sandwiching the base material between the first mold in which the raw material is injected into the groove and a second mold, and molding the raw material onto the base material as the seal member at a temperature where the raw material is vulcanized (crosslinked). The first mold includes a shape that creates a gap between the shape and the inclined portion of the base material when the first flat surface and the second flat surface of the base material are pressed in the second step, and a connecting groove connecting the groove and the shape. The groove of the first mold is provided in the vicinity of the shape.

Further objects or other characteristics of the present invention will become apparent by a preferred embodiment that will be described below with reference to the accompanying drawings.

### ADVANTAGEOUS EFFECTS OF THE INVENTION

According to the present invention, it is possible to provide the molding method and the mold capable of further reducing the distance between the inclined portion of the base material and the seal member when the seal member is molded onto the base material including the inclined portion.

### BRIEF DESCRIPTION OF THE DRAWINGS

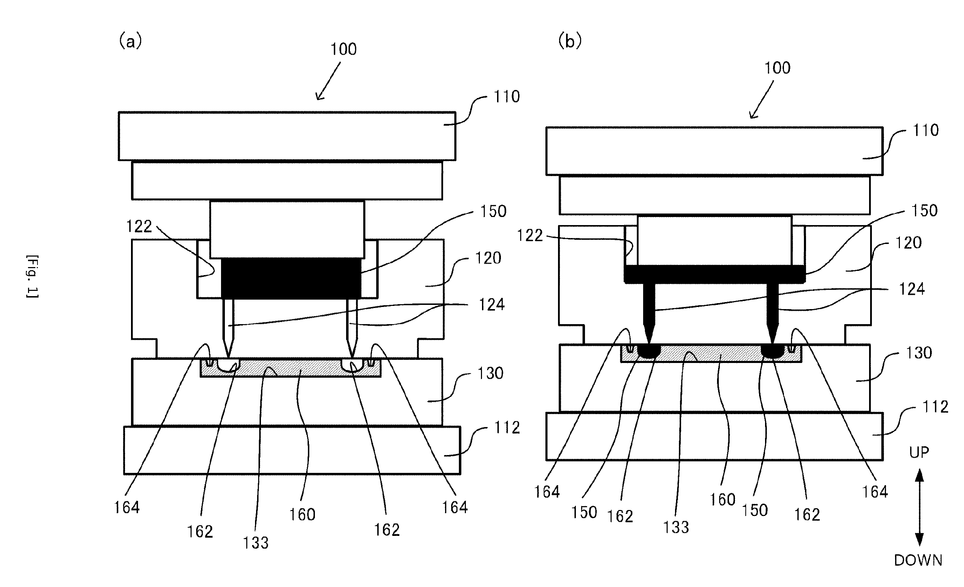

Fig. 1 is a cross-sectional view showing a preforming step of an embodiment, Fig. 1(a) is a view showing a state where a rubber material is charged into a pot of a forming machine, and Fig. 1(b) is a view showing a state where mold clamping and the injection of the rubber material are performed in the forming machine;

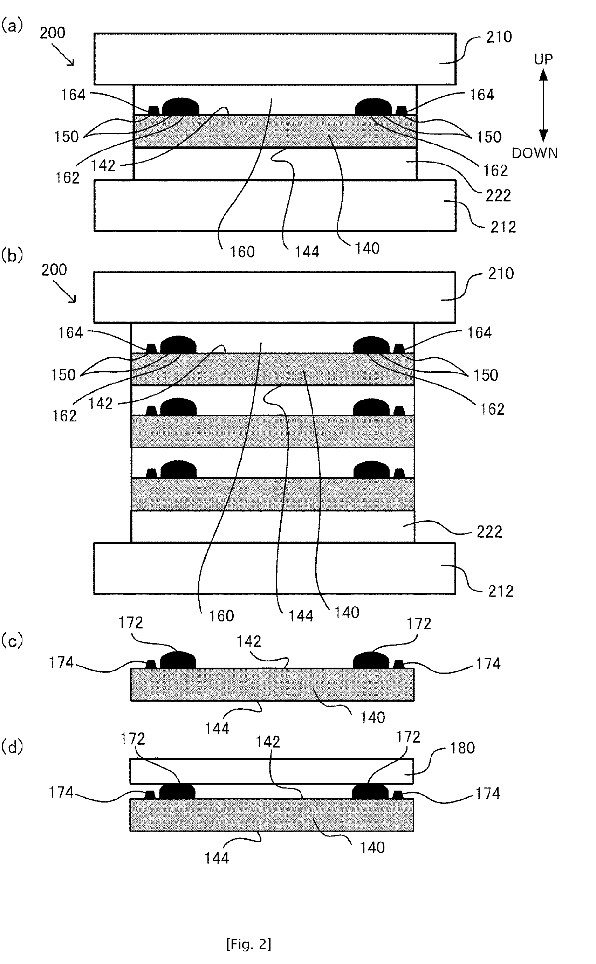

Fig. 2 is a cross-sectional view showing main parts of a molding machine in a vulcanization molding step of the embodiment, Fig. 2(a) is a view showing a state where one pair of a cavity plate and a base material are disposed in the molding machine, Fig. 2(b) is a view showing a state where a plurality of pairs of the cavity plates and the base materials are disposed in the molding machine, Fig. 2(c) is a cross-sectional view showing the base material after molding, and Fig. 2(d) is a view showing a state where an inner region of the base material is sealed by a plate;

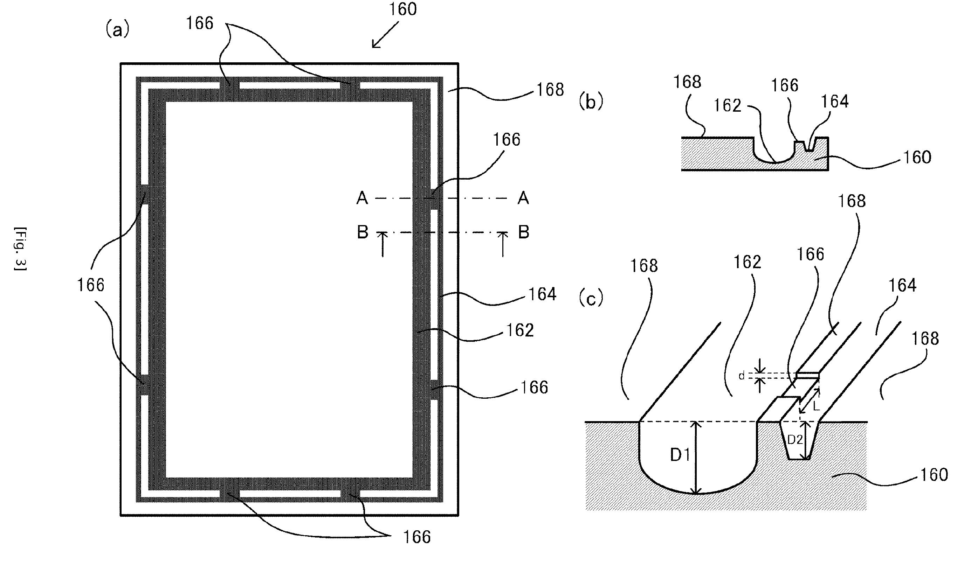

Fig. 3 is a view showing a configuration of the cavity plate of the embodiment, Fig. 3(a) is a view showing a surface of the cavity plate on which a groove is provided, Fig. 3(b) is a cross-sectional view taken along line A-A in Fig. 3(a), and Fig. 3(c) is a perspective view of a cross-section along line B-B in Fig. 3(a);

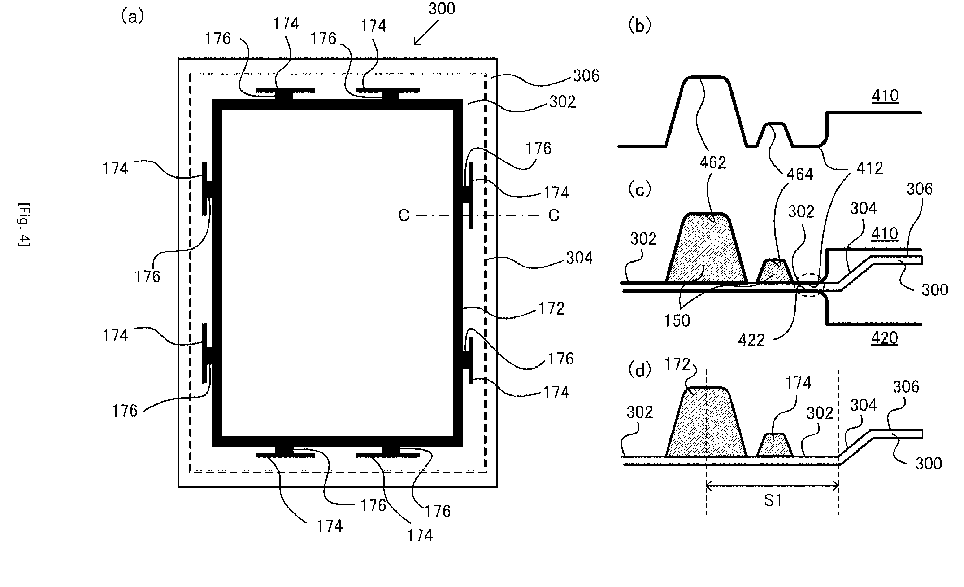

Fig. 4(a) is a view showing a surface of a base material having a flange shape, on which a seal member is molded through the preforming step and the vulcanization molding step of the embodiment and on which the seal member is located, Fig. 4(b) is a cross-sectional view of a cavity plate corresponding to a cross-section C-C in Fig. 4(a), Fig. 4(c) is a cross-sectional view of the cavity plate, the base material, and a lower mold at time of the vulcanization molding step corresponding to the cross-section C-C in Fig. 4(a), and Fig. 4(d) is a cross-section taken along line C-C in Fig. 4(a);

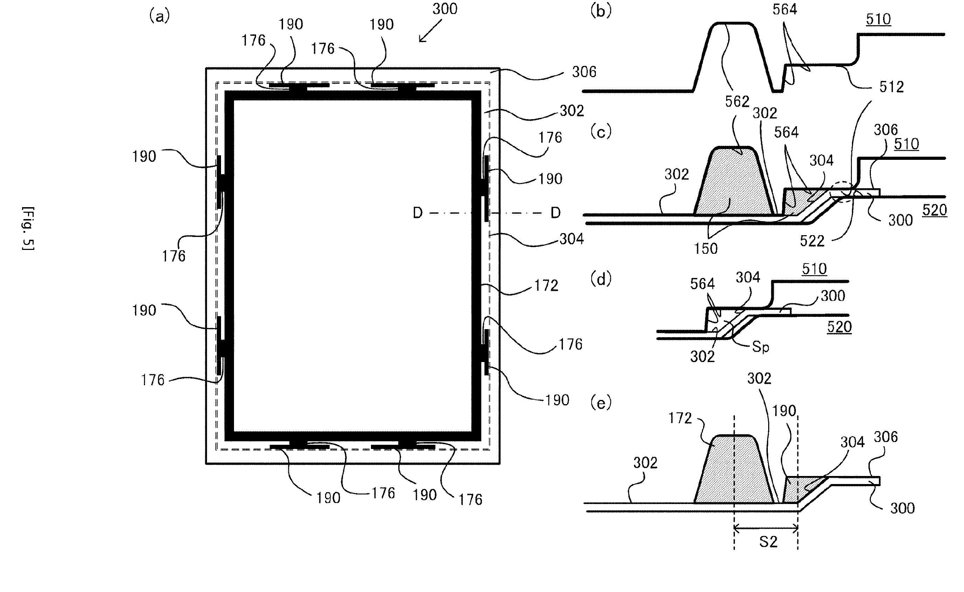

Fig. 5(a) is a view showing a surface of the base material having a flange shape, on which the seal member is molded through the preforming step and the vulcanization molding step of the embodiment and on which the seal member is located, Fig. 5(b) is a cross-sectional view of a cavity plate corresponding to a cross-section D-D in Fig. 5(a), Fig. 5(c) is a cross-sectional view of the cavity plate, the base material, and a lower mold at time of the vulcanization molding step corresponding to the cross-section D-D in Fig. 5(a), Fig. 5(d) is a view showing main parts of the vicinity of a gap Sp, and Fig. 5(e) is a cross-sectional view taken along line D-D in Fig. 5(a); and
Fig. 6 is a cross-sectional view of a molding machine in an example of the related art, Fig. 6(a) is a view showing a state where a rubber material is charged into a pot of the molding machine, and Fig. 6(b) is a view showing a state where mold clamping and the injection of the rubber material are performed in the molding machine.

### DESCRIPTION OF THE EMBODIMENTS

Hereinafter, embodiments will be described with reference to the drawings. Here, the term "forming" refers to a step of shaping rubber in an uncrosslinked state regardless of the use of molds, and the term "molding" refers to a step of shaping rubber (crosslinked rubber) by using molds and performing a crosslinking reaction.

### [Embodiment]

### <Flow until base material with seal member is completed>

A basic flow of a molding method of the present embodiment will be described. When the seal member is, for example, rubber, materials for a rubber material are mixed and kneaded. Examples of the rubber used include thermosetting elastic bodies such as fluororubber, EPDM, NBR, CR, silicone, thermoplastic elastic bodies, thermoplastic resins, and the like. Next, vulcanization promoter mixing is performed on the kneaded materials. Here, vulcanization promoter mixing refers to adding, mixing, and kneading a vulcanization accelerator and a vulcanizing agent with a rubber compound. Incidentally, the material in a state where rubber used as a raw material and a compounding agent such as a filler and a crosslinking agent (vulcanizing agent) are uniformly mixed is also referred to as a rubber compound (rubber material). Next, the rubber material on which vulcanization promoter mixing is performed is dispensed and formed, and then the rubber material is injected into a groove of a cavity plate to be described later at a predetermined pressure, and is formed in an unvulcanized (uncrosslinked) state. In the following description, a step of performing forming in an unvulcanized (uncrosslinked) state is referred to as a preforming step.

In the preforming step, vulcanization (crosslinking) is performed in a state where the cavity plate into which the rubber is injected and a base material are laminated to form a pair. In the following description, a step of performing vulcanization (crosslinking) is referred to as a vulcanization molding step. Incidentally, the vulcanization molding step also includes a case where a substance used as a raw material for the seal member is molded onto the base material at a vulcanization (crosslinking) temperature. After the vulcanization (crosslinking) is completed, and for example, secondary vulcanization is performed on the base material onto which the seal member is transferred (molded), finally, finishing, inspection, and the like are performed, a series of work is completed, and the base material with the seal member is completed as a product.

### (Preforming step)

The preforming step that is a first step will be described. Fig. 1 is a cross-sectional view showing a forming machine 100 in the preforming step of the present embodiment, Fig. 1(a) is a view showing a state where a rubber material 150 that is a raw material for the seal member formed onto the base material is charged into a pot 122 of the forming machine 100, and Fig. 1(b) is a view showing a state where the rubber material 150 is injected into a groove 162 of a cavity plate 160 in the forming machine 100. In Fig. 1, an up-down direction is indicated by a double-headed arrow. Incidentally, in Figs. 1 to 3, for the sake of description, it is assumed that the base material is a flat plate and the cavity plate 160 of which the shape is determined according to the base material is a flat plate.

The forming machine 100 includes heating plates 110 and 112 and molds 120 and 130. The mold 120 includes the pot 122 into which the rubber material 150 is charged, and a gate 124 for injecting the rubber material 150 into the groove 162 of the cavity plate 160. The mold 130 includes a recess 133 in which the cavity plate 160 is disposed.

The cavity plate 160 that is a first mold includes the groove 162 into which the rubber material 150 is injected, and a groove (hereinafter, referred to as an escape groove) 164 for the escape of the rubber material 150 from the groove 162 in the preforming step or the vulcanization molding step. In addition, the cavity plate 160 also includes connecting grooves (not shown) to be described later.

In the forming machine 100, as shown in Fig. 1(a), the rubber material 150 is charged into the pot 122, and the cavity plate 160 is disposed in the recess 133 of the mold 130. Incidentally, it is assumed that positioning between the mold 120 (gate 124) and the mold 130 (the groove 162 of the cavity plate 160) is performed by a known method or the like. Thereafter, as shown in Fig. 1(b), a pressure (hereinafter, also referred to as a mold clamping pressure) is applied to the molds 120 and 130 to clamp the molds, and a pressure for injecting the rubber material 150 from the pot 122 via the gate 124 is applied to inject the rubber material 150 into the groove 162 of the cavity plate 160. The pressure required when injecting the rubber material 150 is referred to as an injection pressure, and is, for example, 1 to 200 MPa. In addition, the temperature of heat generated in the heating plates 110 and 112 during mold clamping shown in Fig. 1(b) is a temperature where the rubber material 150 is not vulcanized (crosslinked) (in other words, unvulcanized (uncrosslinked)) (the substance used as a raw material for the seal member is not crosslinked) and fluidity is maintained. For example, in the present embodiment, the preforming step is performed at a temperature of 80°C. In this respect, the preforming step can also be referred to as an unvulcanized forming step. Incidentally, the temperature in the preforming step is not limited to 80°C, and is set depending on, for example, the viscosity of the rubber material 150. The filling rate of the rubber material 150 into the groove 162 of the cavity plate 160 is, for example, 90% to 110%; however, the filling rate is also not limited to this value.

### (Vulcanization molding step)

The vulcanization molding step that is a second step will be described. Fig. 2 is a cross-sectional view showing main parts of a molding machine 200 in the vulcanization molding step of the present embodiment, Fig. 2(a) is a view showing a state where one pair of the cavity plate 160 and a base material 140 are disposed in the molding machine 200, Fig. 2(b) is a view showing a state where a plurality of pairs (for example, three pairs) of the cavity plates 160 and the base materials 140 are disposed in the molding machine 200, Fig. 2(c) is a cross-sectional view showing the base material 140 after molding, and Fig. 2(d) is a view showing a state where an inner region of the base material 140 is sealed by a plate 180. In Fig. 2, the up-down direction is indicated by a double-headed arrow. Incidentally, since a second pair and a third pair have the same configuration as a first pair in Fig. 2(b), reference signs are omitted.

The molding machine 200 includes heating plates 210 and 212 and a second mold 222 (hereinafter, simply referred to as the mold 222). The base material 140 is, for example, metal, resin, or paper. The base material 140 has a surface 142 onto which a seal member 172 is formed, and a surface 144 opposite to the surface 142. The cavity plate 160 in which the rubber material 150 is injected into the groove 162 in the preforming step is aligned with the surface 142 of the base material 140, and the mold 222 is aligned with the surface 144. Namely, the base material 140 is sandwiched between the cavity plate 160 as a mold and the mold 222. Incidentally, it is assumed that positioning between the cavity plate 160 (the groove 162 filled with the rubber material 150) and the base material 140 is performed by a known method or the like.

In this state, heating is performed by the heating plates 210 and 212 at a temperature where the rubber material 150 is vulcanized (crosslinked) (a substance used as a raw material for the seal member is crosslinked), for example, at 120°C to 220°C, and a predetermined pressure (for example, 5 MPa) is applied in the up-down direction. Here, since the injection of the rubber material 150 into the groove 162 is completed in the preforming step, the predetermined pressure does not include the injection pressure but only the mold clamping pressure. In other words, the injection pressure in the vulcanization molding step is 0 MPa. In addition, when the predetermined pressure and heat are applied, the rubber material 150 in the groove 162 escapes into the escape groove 164 via the connecting grooves (not shown) to be described later. Incidentally, the rubber material 150 in the groove 162 may escape to the escape groove 164 during the preforming step.

Incidentally, Fig. 2(a) shows an example in which the vulcanization molding step is performed on one pair of the cavity plate 160 and the base material 140; however, the present invention is not limited thereto. For example, as shown in Fig. 2(b), molding may be performed on a plurality of pairs, for example, three pairs of the cavity plates 160 and the base materials 140 in one vulcanization molding step. In addition, in Fig. 2, the cavity plate 160 is at the top and the base material 140 is at the bottom; however, the top and bottom may be reversed. When the top and bottom are reversed, the mold 222 becomes an upper mold.

As described above, as shown in Fig. 2(c), the rubber material 150 injected into the groove 162 of the cavity plate 160 is transferred (molded) onto the surface 142 of the base material 140 as the seal member 172. In addition, as shown in Fig. 2(d), by aligning the plate 180 to face the surface 142 of the base material 140 on which the seal member 172 is molded, the inner region is sealed by the seal member 172. For example, gas, liquid, or the like is retained in the sealed region. Incidentally, hereinafter, a vulcanized (crosslinked) portion of the rubber material 150 that has escaped to the escape groove 164 is referred to as a side lip 174. Here, in Figs. 1 and 2, the seal member 172 is provided on the surface 142 of the base material 140; however, the seal member 172 may be provided on the surface 144 of the base material 140 or both surfaces (the surface 142 and the surface 144) of the base material 140.

### (Cavity plate)

A configuration of the cavity plate 160 will be described. Fig. 3 is a view showing a configuration of the cavity plate 160, Fig. 3(a) is a view showing a surface (hereinafter, referred to as a touch surface) 168 of the cavity plate 160 on which the groove 162 is provided, Fig. 3(b) is a cross-sectional view taken along line A-A in Fig. 3(a), and Fig. 3(c) is a perspective view of a cross-section along line B-B in Fig. 3(a). The cavity plate 160 includes the groove 162, the escape groove 164, and connecting grooves 166.

As described above, the groove 162 is a groove into which the rubber material 150 is injected. For example, in the present embodiment, it is assumed that the base material 140 has a rectangular shape having two long sides and two short sides and the seal member is molded into a rectangular frame shape along end portions of the base material 140. For this reason, as shown in Fig. 3(a), similarly, the groove 162 of the cavity plate 160 is also provided in a rectangular frame shape. The groove 162 has a predetermined depth D1 (refer to Fig. 3(c)). The depth D1 of the groove 162 determines a height of the seal member molded onto the base material 140. Incidentally, the molding position, length, and width of the seal member on the base material 140 are determined depending on the purpose of use of the base material 140 and/or the seal member, and are not limited to a shape and the like shown in Fig. 3.

The escape groove 164 is provided parallel to and spaced apart from the groove 162, but may not be parallel thereto. The escape groove 164 is a groove for the escape of surplus rubber when the rubber material 150 injected into the groove 162 in the vulcanization molding step (or the preforming step) expands during heating, exceeds the volume of the groove 162, and becomes surplus. Namely, the occurrence of burrs after the vulcanization molding step can be suppressed by providing the escape groove 164. As shown in Fig. 3(a), for example, in the present embodiment, the escape groove 164 is provided between the groove 162 and four sides (end portions) of the cavity plate 160. In the present embodiment, the escape groove 164 is continuously provided, and similarly to the groove 162, has a rectangular frame shape.

Incidentally, the escape groove 164 may be provided discontinuously. In addition, the escape groove 164 is provided at a position where the purpose of use of the base material 140 on which the seal member 172 is molded is not hindered. For example, in the case of the base material 140 onto which the seal member 172 is molded using the cavity plate 160 in Fig. 3(a), the seal member 172 is molded to retain sealability of a region inside the seal member 172 molded by the groove 162. For this reason, in the cavity plate 160, the escape groove 164 is provided at a position corresponding to a region outside the seal member 172 (namely, the end portions of the base material 140), which does not require the retention of sealability.

The escape groove 164 has a predetermined depth D2 (refer to Fig. 3(c)). The depth D2 of the escape groove 164 determines a height of the side lip 174. Here, the depth D2 of the escape groove 164 is shallower than the depth D1 of the groove 162 (D2 < D1). In other words, the height of the side lip 174 is lower than the height of the seal member 172. This is intended to retain sealability of the region inside the seal member 172 when the plate 180 is aligned with the base material 140 by making the height of the seal member 172 higher than the height of the side lip 174 (refer to Fig. 2(d)). The depth D2 of the escape groove 164, whether the escape groove 164 is continuous or discontinuous, or the length, width, shape, and the like when the escape groove 164 is discontinuous are not limited to those shown in Fig. 3, and may be set depending on the purpose of use of the base material 140 and/or the seal member 172 or the viscosity, injection amount, injection pressure, and the like of the rubber material 150.

The connecting grooves 166 are grooves through which the rubber material 150 expanded by heat in the vulcanization molding step (or the preforming step) escapes into the escape groove 164. The connecting grooves 166 have, for example, a depth d of approximately 0.005 mm to approximately 0.2 mm and a length L of approximately 1 to 6 mm, and are formed to be lower than the touch surface 168. Here, the length L is a length in a direction parallel to the groove 162. Incidentally, the depth d of the connecting grooves 166 is shallower than the depth D1 of the groove 162 and the depth D2 of the escape groove 164 (d < D2 < D1) .

As shown in Fig. 3(a), the connecting grooves 166 are discretely provided between the groove 162 and the escape groove 164. The positions where the connecting grooves 166 are provided, the number, width (in other words, a distance between the groove 162 and the escape groove 164), the length L, and the depth d of the connecting grooves 166 may be set depending on the purpose of use of the base material 140 and/or the seal member 172, the configurations of the groove 162 and the escape groove 164, the viscosity of the rubber material 150, the position of the gate 124, or the like.

For example, metals such as iron, SUS, aluminum, and copper that can withstand a temperature during vulcanization (hereinafter, referred to as a vulcanization (crosslinking) temperature) in the vulcanization molding step and that have good thermal conductivity are suitable for the material of the cavity plate 160. In addition, as the material of the cavity plate 160, for example, ceramic, resin, or the like can also be used as long as these materials satisfy the above-described conditions. In addition, it is assumed that the cavity plate 160 has such a thickness that deformation is prevented and rigidity is maintained in the preforming step and the vulcanization molding step.

Since the volumes of the groove 162 and the escape groove 164 of the cavity plate 160 are known values at the time of designing the cavity plate 160, the amount of surplus rubber can be controlled by the escape groove 164, and the occurrence of burrs can be reduced. In addition, since the injection of the rubber material 150 is performed in the preforming step, no injection pressure is applied when the rubber material 150 is molded onto the base material 140 in the vulcanization molding step. For this reason, deformation or damage of the base material 140 caused by the injection pressure can be reduced. In addition, since the injection pressure is not applied in the vulcanization molding step, the pressure added to the mold clamping pressure to suppress the occurrence of burrs in the related art can be reduced. Further, for example, gate marks remain in transfer molding, injection molding, or the like; however, in the preforming step of the present embodiment, since the rubber material 150 is injected into the groove 162 of the cavity plate 160 in an unvulcanized state, gate marks can be reduced or eliminated.

### <Regarding base material having flange shape>

A case where a seal member is molded onto a base material having a flange shape will be described using Fig. 4. Fig. 4(a) is a view showing a surface of a base material 300 having a flange shape, on which the seal member 172 is molded through the preforming step and the vulcanization molding step and on which the seal member 172 is located, Fig. 4(b) is a cross-sectional view of a cavity plate 410 corresponding to a cross-section C-C in Fig. 4(a), Fig. 4(c) is a cross-sectional view of the cavity plate 410, the base material 300, and a mold 420 at time of the vulcanization molding step corresponding to the cross-section C-C in Fig. 4(a), and Fig. 4(d) is a cross-section taken along line C-C in Fig. 4(a).

As shown in Fig. 4, the base material 300 has a first flat surface 302 (hereinafter, simply referred to as the flat surface 302); an inclined portion 304 that is continuous with the flat surface 302; and a second flat surface 306 (hereinafter, simply referred to as the flat surface 306) that is continuous with the inclined portion 304. Incidentally, in Fig. 4(a), the inclined portion 304 is shown by a double dashed line. The flange shape of the base material 300 is formed by the flat surface 302, the inclined portion 304, and the flat surface 306. In addition, as shown in Fig. 4(a), the seal member 172 and the side lips 174 are formed (or formed in the case of the side lips 174) in a region inside the inclined portion 304 shown by a double dashed line on the base material 300.

Here, when the base material 300 is placed such that the surface on which the seal member 172 is molded faces upward, the flat surface 306 is higher than the flat surface 302 when the flat surface 302 is used as a reference (refer to Figs. 4(c) and 4(d)). In addition, the flat surface 306 is provided at an end portion of the base material 300. Namely, in the base material 300, a region inside the flange shape has a recessed shape when the flat surface 306 is used as a height reference. The seal member 172 is provided to retain sealability of the recessed region.

As shown in Fig. 4(b), the cavity plate 410 includes a groove 462, escape grooves 464, connecting grooves (not shown), and a pressing portion (touch surface portion) 412. The groove 462 is a groove for filling (injecting) the rubber material 150 that becomes the seal member 172. The escape grooves 464 are grooves for the escape of the rubber material 150 from the groove 462. The connecting grooves (not shown) have the same configuration as the connecting grooves 166 described in Fig. 3, and are grooves through which the rubber material 150 escapes from the groove 462 into the escape grooves 464. Incidentally, in Fig. 4(a), the rubber material 150 with which the connecting grooves (not shown) are filled up and which is vulcanized (crosslinked) is shown as connecting portions 176. The pressing portion (touch surface portion) 412 is a portion that presses the base material 300 in the vulcanization molding step.

As shown in Fig. 4(c), the mold 420 includes a pressing portion (touch surface portion) 422. The pressing portion (touch surface portion) 422 is a portion that presses the base material 300 in the vulcanization molding step. In the vulcanization molding step described above, molding is performed by sandwiching the base material 300 between the cavity plate 410 and the mold 420 (also a lower mold) and performing mold clamping. At this time, as shown in Fig. 4(c), the cavity plate 410 and the mold 420 press the region inside the inclined portion 304, namely, the flat surface 302 while avoiding the inclined portion 304 (dashed ellipse).

As shown in Fig. 4(d), the side lips 174 are formed in a region that does not affect the retention of sealability or the performance of a device to be assembled, namely, a region outside the seal member 172. In this manner, when the base material 300 has a flange shape, it is necessary to consider the position of the inclined portion 304, the pressing positions of the cavity plate 410 and the mold 420, and the positions of the side lips 174. Accordingly, S1 (hereinafter, referred to as the distance S1) is required as a distance from the flange shape of the base material 300, specifically, a connection portion between the flat surface 302 and the inclined portion 304 to a center portion of the seal member 172.

For this reason, when the seal member 172 is formed onto the base material 300 using the method shown in Fig. 4, in order to increase the area of the recessed region inside the seal member 172 while retaining sealability of the recessed region inside the seal member 172 on the base material 300, the area of the entirety of the base material 300 has to be increased. For example, when the base material 300 is used as a separator for a fuel cell or the like, increasing the area of the entirety of the base material 300 causes an increase in the size of the fuel cell, which is a risk. For this reason, it is required to increase the area of the recessed region inside the seal member 172 without increasing the area of the entirety of the base material 300.

### <Regarding cavity plate of present embodiment>

A molding method and a cavity plate capable of increasing the area of the recessed region inside the seal member 172 without increasing the area of the entirety of the base material 300 will be described using Fig. 5. Incidentally, the configurations of the base material 300 having a flange shape, the seal member 172, and the connecting portions 176 are the same as those in Fig. 4, the same reference signs are used, and the description thereof will be omitted. Fig. 5(a) is a view showing a surface of the base material 300 having a flange shape, on which the seal member 172 is molded through the preforming step and the vulcanization molding step of the present embodiment and on which the seal member 172 is located, and Fig. 5(b) is a cross-sectional view of a cavity plate 510 corresponding to a cross-section D-D in Fig. 5(a). Fig. 5(c) is a cross-sectional view of the cavity plate 510, the base material 300, and a mold 520 at time of the vulcanization molding step corresponding to the cross-section D-D in Fig. 5(a), Fig. 5(d) is a view showing main parts of the vicinity of a gap Sp, and Fig. 5(e) is a cross-sectional view taken along line D-D in Fig. 5(a).

The cavity plate 510 that is a first mold of the present embodiment includes, as shown in Fig. 5(b), a groove 562, gap forming portions 564, connecting grooves (not shown), and a pressing portion (touch surface portion) 512. The groove 562 is a groove for filling (injecting) the rubber material 150 that becomes the seal member 172. The gap forming portions 564 are made to function similarly to the escape grooves 464 in Fig. 4(b), and are portions for forming the gaps Sp to be described later for the escape of the rubber material 150 from the groove 562 in the vulcanization molding step (or the preforming step). The connecting grooves (not shown) have the same configuration as the connecting grooves 166 described in Fig. 3, and are grooves that connect the groove 562 and the gap forming portions 564. The connecting grooves (not shown) allow the rubber material 150 protruding from the groove 562 to escape into the gaps Sp created by the gap forming portions 564.

The pressing portion (touch surface portion) 512 is a portion that presses the flat surface 306 of the base material 300 in the vulcanization molding step. Incidentally, in the present embodiment, the pressing portion (touch surface portion) 512 is configured to press the flat surface 306 of the base material 300, but is not limited thereto. The position where the pressing portion 512 is disposed, the area of contact of the pressing portion 512 with the base material 300, or the like may be set depending on the purpose of use, shape, and the like of the base material 300 and the cavity plate 510, the position where the seal member 172 is disposed, and the like.

The second mold 520 (hereinafter, simply referred to as the mold 520) is, for example, shaped along the flange shape while providing a clearance between the second mold 520 and the inclined portion 304 of the base material 300, and includes a pressing portion (touch surface portion) 522 at a position facing the pressing portion (touch surface portion) 512 of the cavity plate 510 with the base material 300 sandwiched therebetween. Incidentally, the shape of the mold 520 is not limited to the shape shown in Fig. 5, and may be determined depending on the shapes of the base material 300 and the cavity plate 510 or the pressure during mold clamping, the temperature during heating, or the like in the vulcanization molding step.

In the vulcanization molding step described above, molding is performed by sandwiching the base material 300 between the cavity plate 510 and the mold 520 (also a lower mold) and performing mold clamping. At this time, as shown in Fig. 5(c), the cavity plate 510 presses a region outside the inclined portion 304, namely, the flat surface 306 using the pressing portion 512 while avoiding the inclined portion 304 (dashed ellipse). When the cavity plate 510 presses the base material 300, as shown in Fig. 5(d), the gap Sp surrounded by the gap forming portion 564 and the base material 300 (specifically, the inclined portion 304 and a part of the flat surface 302) is created. During the vulcanization molding step (or the preforming step), the rubber material 150 with which the groove 562 is filled expands and escapes into the gaps Sp via the connecting grooves (not shown). In this manner, in the present embodiment, the gap forming portions 564 are made to function as escape grooves by being provided in the cavity plate 510 and using the flange shape (specifically, the inclined portion 304) of the base material 300. The rubber material 150 that has escaped into the gaps Sp become side lips 190 after the vulcanization molding step. Since the side lips 190 are formed on the inclined portion 304 and parts of the flat surface 302 of the base material 300, the seal member 172 can also be molded at a position closer to the inclined portion 304.

When the molding method and the cavity plate 510 of the present embodiment are used, as shown in Fig. 5(d), the distance from the flange shape of the base material 300, specifically, the connection portion between the flat surface 302 and the inclined portion 304 to the center portion of the seal member 172 is S2 (hereinafter, referred to as the distance S2). The distance S2 is smaller than the distance S1 described in Fig. 4 (S2 < S1). Accordingly, as shown in Fig. 5, it is possible to increase the area of the recessed region inside the seal member 172 on the base material 300 without increasing the area of the entirety of the base material 300.

As described above, according to the present embodiment, it is possible to provide the molding method and the mold capable of further reducing the distance between the inclined portion of the base material and the seal member when the seal member is molded onto the base material including the inclined portion.

The preferred embodiment of the present invention has been described above; however, the present invention is not limited thereto, and various modifications or changes can be made without departing from the concept of the present invention.

For example, in the above-described embodiment, the molding method and the cavity plate 510 are applied to the base material 300 having a flange shape at the end portion; however, the present invention is not limited thereto. For example, when there are one or a plurality of inclined portions in the recessed region inside the seal member 172 molded on the base material 300, the present invention can also be applied the one or plurality of inclined portions.

In addition, for example, the present invention includes the following concepts.

### [Concept 1]

A molding method of the present invention is a molding method for molding a seal member onto a first flat surface of a base material having the first flat surface, an inclined portion continuous with the first flat surface, and a second flat surface continuous with the inclined portion and higher than the first flat surface, the method including: a first step of injecting a raw material for the seal member into a groove at a temperature where the raw material is not vulcanized (crosslinked), in a first mold including the groove into which the raw material is injected; and a second step of sandwiching the base material between the first mold in which the raw material is injected into the groove and a second mold, and molding the raw material onto the base material as the seal member at a temperature where the raw material is vulcanized (crosslinked). The first mold includes a shape that creates a gap between the shape and the inclined portion of the base material when the first flat surface and the second flat surface of the base material are pressed in the second step, and a connecting groove connecting the groove and the shape. The groove of the first mold is provided in the vicinity of the shape.

### [Concept 2]

The second flat surface may be provided at an end portion of the base material.

### [Concept 3]

The base material may be metal, resin, or paper.

### [Concept 4]

The raw material may be rubber.

### [Concept 5]

A mold of the present invention is a mold for molding a seal member onto a first flat surface of a base material having the first flat surface, an inclined portion continuous with the first flat surface, and a second flat surface continuous with the inclined portion and higher than the first flat surface, the mold including: a groove into which a raw material for the seal member is injected at a temperature where the raw material is not vulcanized (crosslinked); a shape that creates a gap between the shape and the inclined portion of the base material when the base material is pressed to mold the raw material onto the first flat surface as the seal member, the raw material being injected into the groove; and a connecting groove connecting the groove and the shape. The groove is provided in the vicinity of the shape.

### REFERENCE SIGNS LIST

100: forming machine
200, 1000: molding machine
110, 112, 210, 212, 1010, 1012: heating plate
120, 130, 222, 420, 520, 1020, 1032: mold
122, 1022: pot
133, 1033: recess
124, 1024: gate
140, 300, 1040: base material
142, 144: surface
150, 1050: rubber material
160, 410, 510: cavity plate (first mold)
162, 462, 562, 1026: groove
164, 464: escape groove
166: connecting groove
168: touch surface
172: seal member
174, 190: side lip
176: connecting portion
180: plate
302, 306: flat surface
304: inclined portion
412, 422, 512, 522: pressing portion
564: gap forming portion
Sp: gap

## Claims

1. A molding method for molding a seal member onto a first flat surface of a base material having the first flat surface, an inclined portion continuous with the first flat surface, and a second flat surface continuous with the inclined portion and higher than the first flat surface, the method comprising:
a first step of injecting a raw material for the seal member into a groove at a temperature where the raw material is not vulcanized, in a first mold including the groove into which the raw material is injected; and
a second step of sandwiching the base material between the first mold in which the raw material is injected into the groove and a second mold, and molding the raw material onto the base material as the seal member at a temperature where the raw material is vulcanized,
wherein the first mold includes a shape that creates a gap between the shape and the inclined portion of the base material when the first flat surface and the second flat surface of the base material are pressed in the second step, and a connecting groove connecting the groove and the shape, and
the groove of the first mold is provided in the vicinity of the shape.

2. The molding method according to claim 1,
wherein the second flat surface is provided at an end portion of the base material.

3. The molding method according to claim 1 or 2,
wherein the base material is metal, resin, or paper.

4. The molding method according to any one of claims 1 to 3,
wherein the raw material is rubber.

5. A mold for molding a seal member onto a first flat surface of a base material having the first flat surface, an inclined portion continuous with the first flat surface, and a second flat surface continuous with the inclined portion and higher than the first flat surface, the mold comprising:
a groove into which a raw material for the seal member is injected at a temperature where the raw material is not vulcanized;
a shape that creates a gap between the shape and the inclined portion of the base material when the base material is pressed to mold the raw material onto the first flat surface as the seal member, the raw material being injected into the groove; and
a connecting groove connecting the groove and the shape,
wherein the groove is provided in the vicinity of the shape.
